# EUROPEAN PATENT APPLICATION

(11) **EP 0 718 844 A2**
(43) Date of publication of application: **26.06.1996**
(21) Application number: 95309154.3
(22) Date of filing: 15.12.1995
(51) Int. Cl.: G11B 27/028, G11B 31/00, G11B 27/30, H04N 5/775, H04N 5/782

(54) **Radio-integrated video tape recorders**

(30) Priority: 21.12.1994 JP 317419/94
(71) Applicant: SONY CORPORATION, Tokyo (JP)
(72) Inventor: Miyake, Chieko, Sony Corporation, Tokyo 141 (JP); Kurita,Tadashi, Sony Corporation, Tokyo 141 (JP); Ohta,Yoshihiro, Sony Corporation, Tokyo 141 (JP)
(74) Representative: Williams, Janice

(57) **Abstract**

A radio-integrated video tape recorder (VTR) comprises a radio tuner section for receiving radio broadcast programs and outputting the received audio signals, a character generator for producing a video signal based on display data of a microprocessor and outputting the video signal, a VTR section for recording an output audio signal of the radio tuner section and an output video signal of the character generator by converting these signals into the signals for recording and a microprocessor for respectively controlling the radio tuner section, character generator and VTR section to output situation data during the recording operation in the radio broadcast program recording mode to the character generator as the display data to assure easier retrieval of the radio broadcast programs recorded on a video tape. In the radio broadcast program recording mode, the microprocessor outputs the situation data (time data, receiving data) during the recording to the character generator as the display data, the character generator outputs the display data to the VTR section as a video signal, and the VTR section records the video signal of the character generator on the video tape together with the audio signal of the radio tuner section.

## Description

The present invention relates to radio-integrated video tape recorders (VTRs) comprising a function for receiving radio broadcast programs.

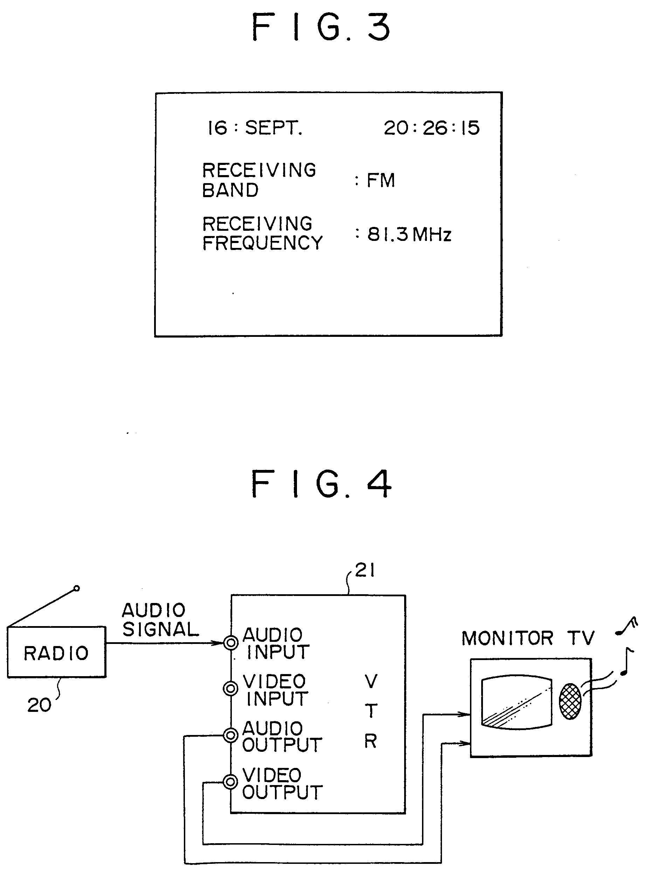

A video tape recorder (VTR) can record both video signal and audio signal for a longer period, for example, six (6) hours when these signals are recorded on a 120-minute video tape in the triple speed recording mode. Therefore, such recording method is often employed for recording an FM broadcast program for a longer time or an English conversation program of 15 minutes a day for a month in total on the same tape. Usually, a radio broadcast program has been recorded by connecting an audio output of a radio receiver 20 to an audio input terminal of VTR 21 and then setting the VTR 21 to the recording mode as shown in Fig. 4. Even in the case of a radio-integrated VTR, recording has been realized by only supplying an audio output of a radio tuner section to the VTR and then setting the VTR to the recording mode.

However, according to the systems explained above, since only an audio signal is recorded, it is not easy to retrieve the desired programs or recording points after the recording. That is, in the case of retrieving TV broadcast programs, cuing of a program can be realized through observation of a program displayed on the display screen using the cue or review function, but in the case of retrieving the radio broadcast programs not accompanied by the video signal, any video signal is not displayed when the cue or review function is activated. Therefore, it is only way for retrieval to reproduce an audio signal in the normal speed reproducing mode even when the recording time is very long.

According to one aspect of the present invention, a radio-integrated VTR comprises a radio tuner section for receiving a radio broadcast program and outputs the received audio signal, a character generator for producing a video signal based on the displayed data of a microprocessor and then outputting such video signal, a VTR section for recording the output audio signal of the radio tuner section and the output video signal of the character generator by converting these signals into the recording signals and a microprocessor for controlling respective operations of the radio tuner, character generator and VTR section to output situation data of recording operation to the character generator as the display data during the radio broadcast recording mode.

Another aspect of the invention is set forth in claim 1.

Embodiments of the invention provide a radio-integrated VTR which ensures easier retrieval of recorded radio broadcast programs.

According to an embodiment of the present invention, situation data outputted during the recording operation includes time data and receiving data.

According to an embodiment of the present invention, the receiving data includes a receiving frequency and a broadcasting station name.

The character generator may comprise means for designating & background color of characters and numerals of the display data and means for superimposing a synchronous signal in the subsequent stage of the means for designating the background color.

According to an embodiment of the invention, when the radio broadcast program recording mode is selected, the VTR section is set to the condition for waiting the recording operation, the radio tuner section is set to the receiving condition and the VTR section is set to the recording condition after a composite video signal is outputted from the synchronous signal superimposing means of the character generator.

In the reproducing mode, since the situation data (for example, time data and receiving data) outputted during the recording operation is displayed on the screen, the desired program or recording point can be retrieved by observing such situation data. Moreover, the more effective retrieval can also be realized by utilizing the cue and review functions.

Embodiments of the invention will now be described, by way of example, with reference to the accompanying drawings in which:
Fig. 1A is a schematic circuit block diagram of a radio-integrated VTR.
Fig. 1B is a flowchart of the radio broadcast program recording operation of an embodiment.
Fig. 2 is a circuit block diagram of the character generator of an embodiment.
Fig. 3 illustrates a condition of the reproduced display screen of an embodiment.
Fig. 4 is a constitutional diagram for recording a radio broadcast program with A VTR.

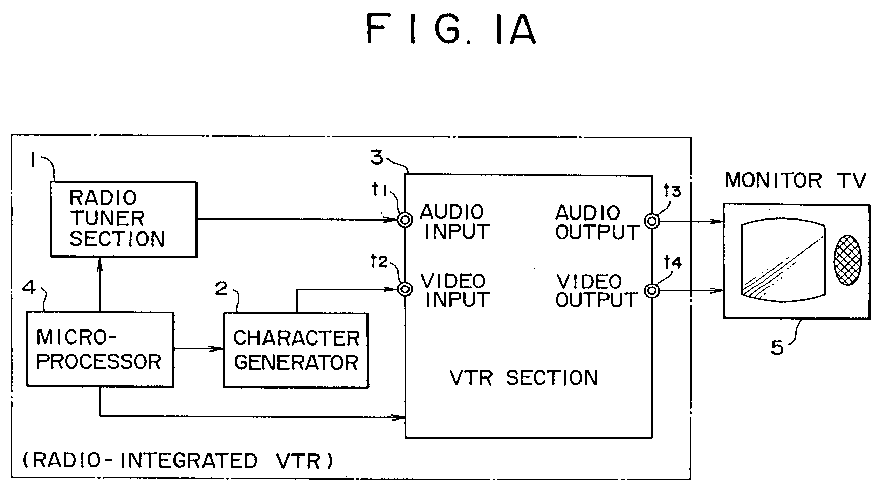

Fig. 1A to Fig. 3 illustrate an embodiment of the present invention. Fig. 1A is a schematic circuit block diagram of a radio-integrated VTR. In Fig. 1A, a radio tuner section 1 inputs receiving signals from an antenna not illustrated and then picks up a receiving signal of the selected frequency from this receiving signals. The selected frequency is varied on the basis of the selection control signal of a microprocessor. An audio signal thus received is supplied to an audio input terminal t₁ of the VTR section 3.

A character generator generates a composite video signal of the display screen corresponding to the display control signal of the microprocessor 4 on the basis of this control signal. This composite video signal is supplied to the video input terminal t₂ of the VTR section 3. Detail constitution of the character generator 2 will be explained hereunder.

The VTR section 3 respectively converts an input audio signal and an input video signal to signals for recording and records these converted signals on a video tape. Meanwhile, the VTR section 3 also reproduces the signals recorded on the video tape to recover the signals of the original signal bands and then respectively outputs the audio signal from the audio output terminal t₃ and the video signal from the video output terminal t₄, respectively. The audio output terminal t₃ and the video output terminal t₄ are connected respectively to each input terminal of the monitor TV 5. Moreover, the VTR section 3 is controlled by a drive control signal of the microprocessor 4 to execute various operations for reproduction, recording, fast feeding and rewinding, etc.

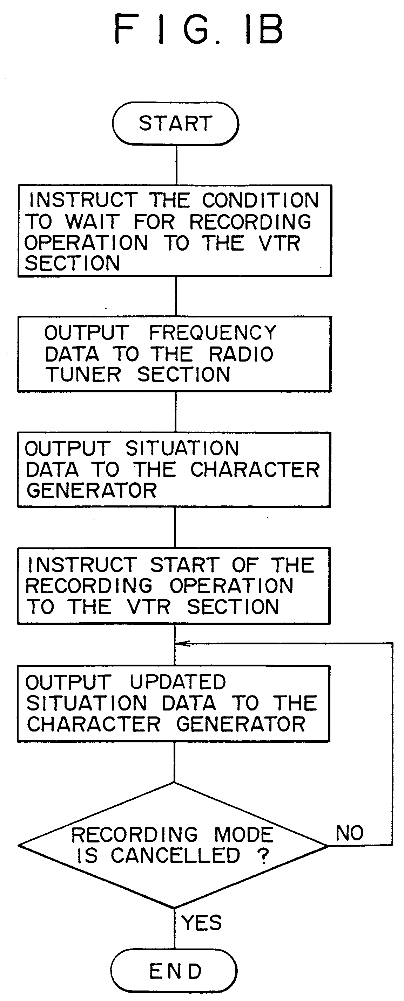

On the basis of an operation command inputted by an operator, the microprocessor 4 outputs a control signal to the radio tuner section 1, character generator 2 and VTR section 3, etc. as explained above. In addition, the microprocessor 4 comprises a timer and has an internal memory for storing font address data correspondence table and color data, etc. Content of the display control signal to the character generator 2 is display position address and display data. When the radio broadcast program recording mode is selected, time data and receiving data are outputted as the display data explained above and background color data is also outputted as the display control signal to the character generator 2 during execution of the flowchart shown in Fig. 1B. In this embodiment, time data includes "Month", "Date", "Day" and "Time", while the receiving data includes "Receiving band" and "Receiving frequency". But, these contents may be changed as required. For instance, "Year" may be displayed or "Day" may be deleted as the time data. Moreover, as the receiving data, "Receiving frequency" may be replaced with "Broadcasting station name" and both "Receiving frequency" and "Broadcasting station name" can be displayed.

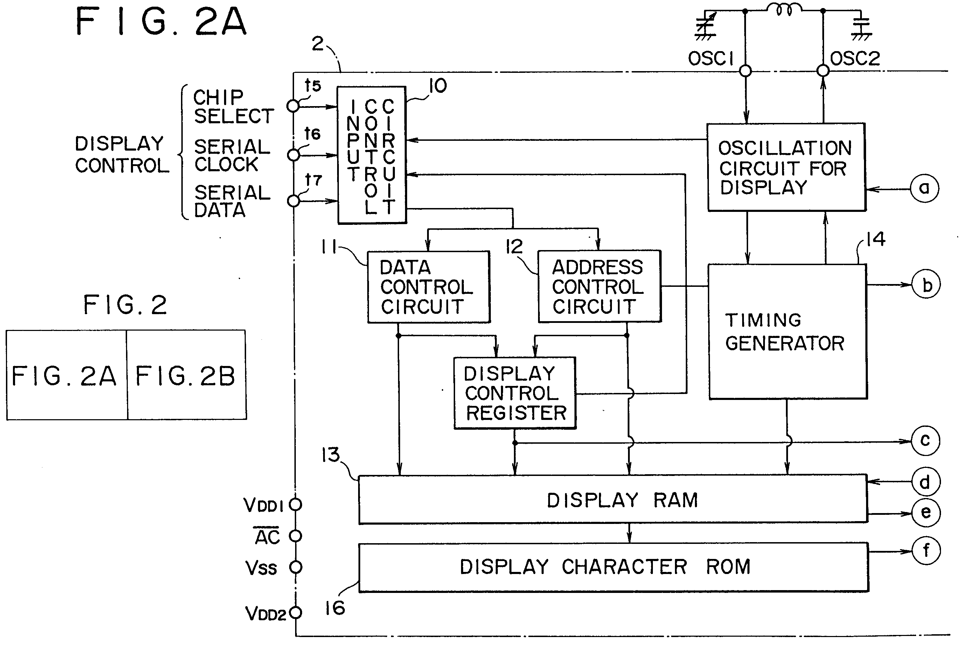

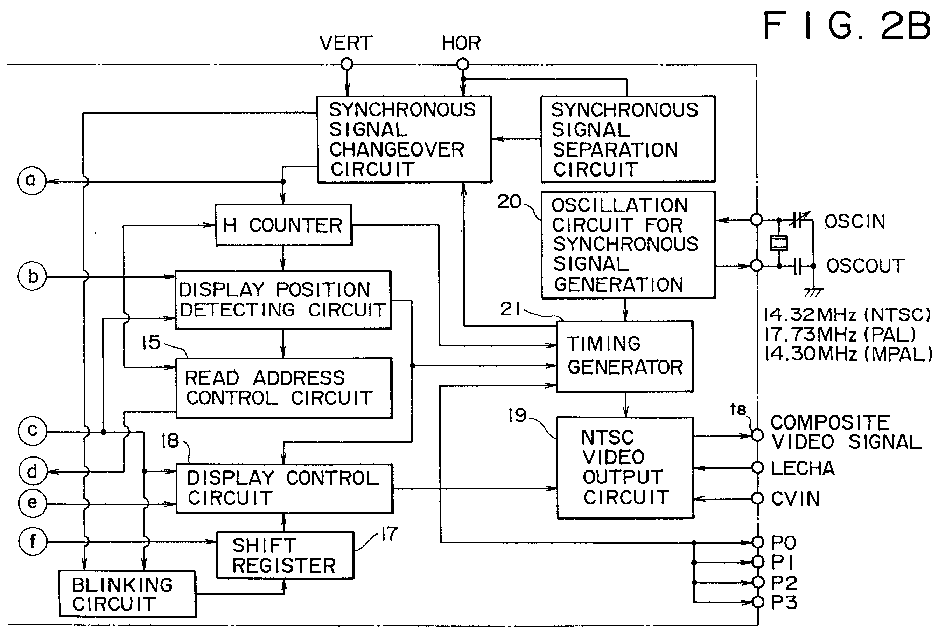

Fig. 2 shows a circuit block diagram of the character generator 2. In Fig. 2, the display control signal from the microprocessor 4 is actually a chip select signal and a serial clock signal and a serial data signal. As the serial data, the display position data and display data and background color data explained above are included. These signals are supplied to an input control circuit 10 through the input terminals t₅ to t₇. The input control circuit 10 fetches the data only during the L level period of the chip select signal and then outputs the display data and background color data to the data control circuit 11 and the display position address to the address control circuit 12, respectively. The display data is stored in the predetermined address of the display RAM 13 based on the write address of the address control circuit 12. That is, the display data is stored in the address corresponding to the display position on the display screen. Moreover, the background color data is also stored in the display RAM 13.

The display RAM 13 outputs the display data to a display character ROM 16 based on the read address of a read address control circuit 15. A display character ROM 16 outputs the font data (video data of character and numeral) corresponding to the display data (font address) to a shift register 17. The shift register 17 outputs the font data to a display control circuit 18 in the display timing on the display screen, while the display RAM 13 outputs the background color data to the display control circuit 18 in the display timing on the display screen. The display control circuit 18 generates a video signal by mixing the font data and background color data and then outputs this video signal to an NTSC video output circuit 19.

On the other hand, an oscillation circuit 20 for generating a synchronous signal outputs an original clock signal to a timing generator 21 and the timing generator 21 generates internal synchronous signals (horizontal synchronous signal and vertical synchronous signal) from the original clock signal to output these synchronous signals to the NTSC video output circuit 19. The NTSC video output circuit 19 superimposes the internal synchronous signals on the video signal of the display control circuit 18 to generate a composite video signal. This composite video signal is supplied to the video input terminal t₂ of the VTR section 3 via the output terminal t₈.

Next, operations of the above constitution will be explained. When the radio broadcast program recording mode is selected, the microprocessor 4 executes operations of the flowchart of Fig. 1B. Namely, the microprocessor 4 outputs a drive control signal to the VTR section 3 to set this section to the condition to wait for the start of recording operation. Next, the microprocessor 4 outputs a band selection control signal to the radio tuner section 1 to set this section to the radio broadcast (frequency) receiving condition. The microprocessor 4 also outputs a display control signal to the character generator 2, causing it to output a composite video signal including the situation data during the recording operation as the display data. Next, the microprocessor 4 outputs a drive control signal to the VTR section 3 to set this section to the recording mode. Thereby, an audio signal of the radio broadcast program and a video signal including the situation data during the recording operation as the display data are recorded on the video tape. The character generator 2 sequentially outputs data until the recording mode is cancelled continuously updating the situation data (current time) during the recording operation.

When the video tape having completed the recording as explained above is replayed, the situation data (time data, receiving data) during the recording operation as shown in Fig. 3 are displayed on the screen together with reproduction of voices. Therefore, the desired recorded program or recording point can easily be found by observing such situation data or listening the reproduced voice by utilizing the fast feeding and rewinding functions. Moreover, retrieval can be done more effectively because it is possible to retrieve the video tape while observing the situation data during the recording operation displayed on the display screen by utilizing the cue and review functions.

Here, since the character generator 2 can designate the background color during display of characters and numerals, it is possible to record radio programs by changing the background colors for the recording day. For instance, in the case where the English conversation program of 15 minutes a day is recorded continuously for a month, the quick cuing is possible by effectuating the fast feeding and rewinding functions while an operator is observing the colors of displayed on the screen.

As explained above, the present embodiment provides an excellent effect that the recorded radio broadcast programs can be retrieved easily because the situation data (time and receiving data) during the recording operation is recorded as the video signal for the recording of a radio broadcast program.

## Claims

1. A radio-integrated video tape recorder (VTR) comprising:
a radio tuner section for receiving radio broadcast programs and outputting the received audio signals;
a character generator for producing a video signal based on display data of a microprocessor and outputting said video signal;
a VTR section for recording an output audio signal of said radio tuner section and an output video signal of said character generator by converting these signals into the signals for recording; and
a microprocessor for respectively controlling said radio tuner section, character generator and VTR section to output situation data during the recording operation in the radio broadcast program recording mode to said character generator as the display data.

2. A radio-integrated VTR according to claim 1, wherein said situation data during the recording operation includes time data and receiving data.

3. A radio-integrated VTR according to claim 2, wherein said receiving data includes a receiving frequency.

4. A radio-integrated VTR according to claim 2, wherein said receiving data includes a radio broadcasting station name.

5. A radio-integrated VTR according to claim 1, wherein said character generator comprises means for designating background colors of characters and numerals of display data.

6. A radio-integrated VTR according to claim 5, wherein said character generator comprises means for superimposing a synchronous signal in the subsequent stage of said means for designating the background colors.

7. A radio-integrated VTR according to claim 6, wherein when the radio broadcast program recording mode is selected, said VTR section is set in the condition for waiting the recording operation, said radio tuner section is set in the receiving condition and said VTR section is set to the recording condition after a composite video signal is outputted from synchronous signal superimposing means of said character generator.
